# EUROPÄISCHE PATENTANMELDUNG

(11) **EP 2 814 140 A2**
(43) Veröffentlichungstag der Anmeldung: **17.12.2014**
(21) Anmeldenummer: 14001794.8
(22) Anmeldetag: 21.05.2014
(51) Int. Cl.: H02K 1/20

(54) **Bleche und Blechpaket für elektrische Maschinen**

(30) Priorität: 13.06.2013 DE 102013010249
(71) Anmelder: Kienle + Spiess GmbH, 74343 Sachsenheim (DE)
(72) Erfinder: Bauer, Steffen, 74374 Zaberfeld (DE); Dutt, Susanne, 75446 Wiernsheim (DE)
(74) Vertreter: Kohl, Karl-Heinz

(57) **Zusammenfassung**

Zur Bildung von Lüftungskanälen (19) in den Stator/Rotorpaketen (20) wird das Stator/Rotorblech mit den aus der Blechebene herausgebogenen Blechstücken versehen, die Distanzstücke (9) zwischen aufeinander liegenden Paketabschnitten (22) bilden. Aus dem Blech werden Blechstücke teilweise ausgestanzt und herausgebogen. Die so gebildeten Distanzstücke (9) bilden beim Aufeinandersetzen der Paketabschnitte (22) die Lüftungskanäle (19) innerhalb des Stator/Rotorpaketes (20).

## Beschreibung

Die Erfindung betrifft ein Stator/Rotorblech für Stator/Rotorpakete von Generatoren und Elektromotoren nach dem Oberbegriff des Anspruches 1, ein Stator/Rotorpaket mit einem solchen Stator/Rotorblech nach Anspruch 15 und ein Verfahren zur Herstellung eines Stator/Rotorbleches nach dem Oberbegriff des Anspruches 17.

Insbesondere bei Wind- und Wasserkraftanlagen werden in den Generatoren und Elektromotoren Statoren und Rotoren eingesetzt, in deren Blechpaketen diese quer zu ihrer Achse durchsetzende Lüftungskanäle vorgesehen sind. Die durch die Lüftungskanäle strömende Luft nimmt die im Blechpaket entstehende Wärme auf und leitet sie nach außen. Um die Lüftungskanäle herzustellen, werden auf die Stator- bzw. Rotorbleche, die als Abstandshalter dienen sollen, Leisten als Distanzstücke aufgeschweißt. Hierzu ist es notwendig, jede einzelne Leiste in eine Vorrichtung einzulegen. Für unterschiedliche Formen der Stator- und Rotorbleche ist hierfür eine eigene Vorrichtung erforderlich. Sobald die Leiste eingelegt ist, wird das Blech aufgelegt und beispielsweise über einen Dorn mit Fixierung ausgerichtet, damit die Leiste positionsgerecht am Stator- bzw. Rotorblech befestigt werden kann. Die Leiste wird an radial verlaufenden Zähnen des Stator- bzw. des Rotorbleches angebracht, welche Nuten voneinander trennen. Jede Leiste wird mit mehreren Schweißpunkten am Blech befestigt. Für jeden einzelnen Schweißpunkt müssen die entsprechenden Elektroden angebracht werden. Ein gleichzeitiges Punktschweißen an mehreren Stellen des Bleches ist nicht möglich. Darum müssen die Elektroden für jeden Schweißpunkt stets neu positioniert werden. Je nach Länge der Leiste werden beispielsweise drei oder auch mehr Schweißpunkte benötigt, um die Leiste mit dem entsprechenden Blech zu verbinden. Die Herstellung der entsprechenden Abstandsbleche ist aufwändig, schwierig und benötigt erhebliche Zeit.

Es ist auch bekannt, die Leisten durch Widerstandsschweißen mit dem Blech zu verbinden.

Es sind darüber hinaus Leisten als Distanzstücke bekannt, die wenigstens einen Steckteil aufweisen, mit dem sie in entsprechende Ausstanzungen im Blech gesteckt werden. Üblicherweise haben die Leisten zwei mit Abstand voneinander liegende Steckzapfen. Die entsprechenden Bleche haben in diesem Falle zwei Stecköffnungen, durch welche die Steckzapfen der Leisten gesteckt werden. Nach dem Steckvorgang werden die Leisten üblicherweise noch durch einen Schweißvorgang mit dem Blech verbunden. Die Herstellung der Abstandsbleche ist ebenfalls arbeits- und zeitaufwändig.

Der Erfindung liegt die Aufgabe zugrunde, das gattungsgemäße Stator/Rotorblech, das gattungsgemäße Stator/Rotorpaket und das gattungsgemäße Verfahren so auszubilden, dass die Distanzstücke in einfacher und zeitsparender Weise vorgesehen werden können.

Diese Aufgabe wird beim gattungsgemäßen Stator/Rotorblech erfindungsgemäß mit den kennzeichnenden Merkmalen des Anspruches 1, beim Stator/Rotorpaket erfindungsgemäß mit den Merkmalen des Anspruches 15 und beim gattungsgemäßen Verfahren erfindungsgemäß mit den kennzeichnenden Merkmalen des Anspruches 17 gelöst.

Beim erfindungsgemäßen Stator/Rotorblech sind die Distanzstücke einstückig mit dem Blech ausgebildet und aus der Blechebene herausgebogen. Das Stator/Rotorblech kann somit zusammen mit den Distanzstücken einstückig hergestellt werden. Die Stator/Rotorbleche können in einer Maschinenaufspannung gestanzt und die Blechstücke zur Bildung der Distanzstücke herausgebogen werden. Da sie einstückig mit dem Blech ausgebildet sind, ist es nicht erforderlich, sie zusätzlich durch Schweißen, Kleben und dergleichen mit dem Blech zu verbinden. Dies wirkt sich auch auf die Festigkeit und Stabilität des mit den Distanzstücken versehenen Bleches aus. Die Stator/Rotorbleche lassen sich in einfacher und zeitsparender Weise mit den Distanzstücken versehen, da sie lediglich durch einen Biegevorgang aus dem Blech herausgebogen werden müssen.

Die Stator- und Rotorbleche werden vorteilhaft innerhalb von Stator- bzw. Rotorpaketen eingesetzt, die bei Wind- und Wasserkraftanlagen Verwendung finden. Durch die Distanzstücke lassen sich innerhalb des Stator- bzw. Rotorpaketes in einfacher Weise Lüftungskanäle bilden, durch welche beim Einsatz der Statoren bzw. Rotoren Luft hindurchtreten kann, um die im Betrieb entstehende Wärme abzuführen. Das mit den Distanzstücken versehene Blech wird vorteilhaft aus dem gleichen Material hergestellt wie die Stator- bzw. Rotorbleche innerhalb des Stator- bzw. Rotorpaketes. Das Blech mit den Distanzstücken ist wie die restlichen Bleche innerhalb des Blechpaketes ein Elektroblech und somit ein Aktivblech. Infolge der einstückigen Ausbildung besteht nicht die Gefahr, dass die Distanzstücke sich vom Blech lösen.

Vorteilhaft sind die Distanzstücke radial verlaufend am Blech vorgesehen. Dadurch werden radial verlaufende Lüftungskanäle innerhalb des Blechpaketes gebildet, die eine optimale Wärmeabfuhr gewährleisten. Da die Distanzstücke aus dem Blech herausgebogen sind, haben sie nur eine geringe Wandstärke, so dass, wenn über den Umfang des Stator/Rotorbleches die Distanzstücke vorgesehen sind, der Strömungsquerschnitt der Lüftungskanäle im Verhältnis zu der von den Distanzstücken gebildeten Querschnittsfläche hoch ist.

Die Distanzstücke können auch unter einem Winkel zur zugehörigen Radialen angeordnet sein. Unter der zugehörigen Radialen ist jede Radiale zu verstehen, die durch das Distanzstück verläuft. Aufgrund der Schrägstellung der Distanzstücke ergibt sich, in Radialrichtung gesehen, eine breitere Auflagefläche für das auf den Distanzstücken aufliegende Blech als bei einer radialen Ausrichtung der Distanzstücke.

Bei einer bevorzugten Ausführungsform sind die Distanzstücke über den Umfang des Stator/Rotorbleches gleichmäßig verteilt angeordnet. Dadurch ergeben sich innerhalb des Blechpaketes über den Umfang gleichmäßig verteilt angeordnete Lüftungskanäle, die eine gute Wärmeabfuhr ermöglichen.

Es besteht aber auch die Möglichkeit, die Distanzstücke über den Umfang des Stator/Rotorbleches ungleichmäßig verteilt anzuordnen.

Da die Distanzstücke aus dem Blech herausgebogen sind, befindet sich neben den Distanzstücken jeweils eine Ausnehmung im Stator/Rotorblech. Die Distanzstücke können hierbei so vorgesehen sein, dass sie stets an der gleichen Seite der zugehörigen Ausnehmung vorgesehen sind, wodurch sich eine symmetrische Biegereihe ergibt, in der sich die Distanzstücke befinden. Hierbei können die Distanzstücke entweder, in Umfangsrichtung gesehen, am rechten oder linken Rand der Ausnehmung vorgesehen sein.

Bei einer anderen Ausführungsform können die Distanzstücke auch so vorgesehen werden, dass bei benachbarten Ausnehmungen das eine Distanzstück am rechten und das andere Distanzstück am linken Rand der Ausnehmung vorgesehen ist. Auf diese Weise ergibt sich eine U-förmige Anordnung der Distanzstücke, weil die am rechten und am linken Rand der Ausnehmungen befindlichen Distanzstücke jeweils paarweise vorhanden sind. Bei einer solchen Ausbildung kann für die beiden Distanzstücke jeweils eine Ausnehmung vorgesehen sein. Es ist aber auch möglich, dass für die beiden Distanzstücke nur eine einzige Ausnehmung vorhanden ist. In einem solchen Fall werden die Blechstücke nach dem teilweisen Herausstanzen aus dem Blech in der Mitte voneinander getrennt und die rechts und links dieser Schnittlinie befindlichen Blechstücke aus der Blechebene herausgebogen.

Die Distanzstücke sind bei einer einfachen Ausführungsform in wenigstens einer Reihe mit Abstand hintereinander angeordnet. Diese Reihe liegt koaxial zu einer zentrischen Öffnung des Stator- bzw. des Rotorbleches.

Je nach Breite des Stator/Rotorbleches können die Distanzstücke aber auch in zwei oder mehr Reihen angeordnet sein, die jeweils koaxial zur zentrischen Öffnung des Stator/Rotorbleches liegen. Die Reihen haben in Radialrichtung vorteilhaft Abstand voneinander. Dann haben vorteilhaft auch die Distanzstücke und Ausnehmungen in diesen Reihen in Radialrichtung Abstand voneinander. Infolge dieses Abstandes verbleiben zwischen den Reihen in Umfangsrichtung verlaufende durchgehende Blechabschnitte, die dem Stator/Rotorblech eine ausreichende Festigkeit geben.

Zumindest einige der Distanzstücke in den Reihen sind vorteilhaft jeweils fluchtend zueinander angeordnet. Dadurch ergeben sich innerhalb des Stator- oder Rotorpaketes von innen nach außen durchgehende Lüftungskanäle.

Zumindest einige der Distanzstücke können in den Reihen auch in Umfangsrichtung versetzt angeordnet sein. Dabei können die Distanzstücke radial verlaufend, aber auch winklig zur zugehörigen Radialen vorgesehen sein. Auf diese Weise kann das Stator/Rotorblech individuell an den jeweiligen Einsatzfall angepasst werden.

Die Distanzstücke sind vorteilhaft gleich lang wie der Rand der zugehörigen Ausnehmung, der die Biegekante bildet.

Es ist bei einer anderen vorteilhaften Ausführungsform aber auch möglich, die Distanzstücke so vorzusehen, dass sie kürzer sind als derjenige Rand der Ausnehmung, an dem sie hochgebogen sind. Eine solche Gestaltung hat den Vorteil, dass sich die im Blech teilweise herausgestanzten Blechstücke einfach hochbiegen lassen, da die quer zur Biegekante liegenden Ränder der Distanzstücke Abstand von den entsprechenden Rändern der Ausnehmung haben.

Die Distanzstücke sind vorteilhaft senkrecht aus der Blechebene herausgebogen.

Das Stator- bzw. Rotorpaket zeichnet sich dadurch aus, dass es wenigstens ein Stator- bzw. Rotorblech mit den herausgebogenen Distanzstücken aufweist. Je nach Höhe des Stator- bzw. Rotorpaketes können zwei oder auch mehr Stator- bzw. Rotorbleche mit Distanzstücken vorgesehen sein, um über die Höhe des Paketes mehrere Lüftungsdurchgänge zu bilden.

Das Stator/Rotorblech mit den herausgebogenen Distanzstücken trennt zwei Blechpaketabschnitte des jeweiligen Blechpaketes voneinander und dient zur Bildung von Lüftungskanälen, welche das Blechpaket quer zu seiner Achse durchsetzen.

Das erfindungsgemäße Verfahren zeichnet sich dadurch aus, dass aus einem Blech die Stator- bzw. die Rotorbleche in bekannter Weise gestanzt werden. Zusätzlich werden aus dem Blech Blechstücke nur teilweise ausgestanzt, so dass sie noch mit dem Blech verbunden sind. Diese Blechstücke werden dann in einem Biegevorgang aus der Blechebene herausgebogen, um die Distanzstücke zu bilden.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: eine Blechtafel, in die in einem ersten Stanzschritt Stanzschnitte zur Herstellung eines Statorbleches eingebracht worden sind,

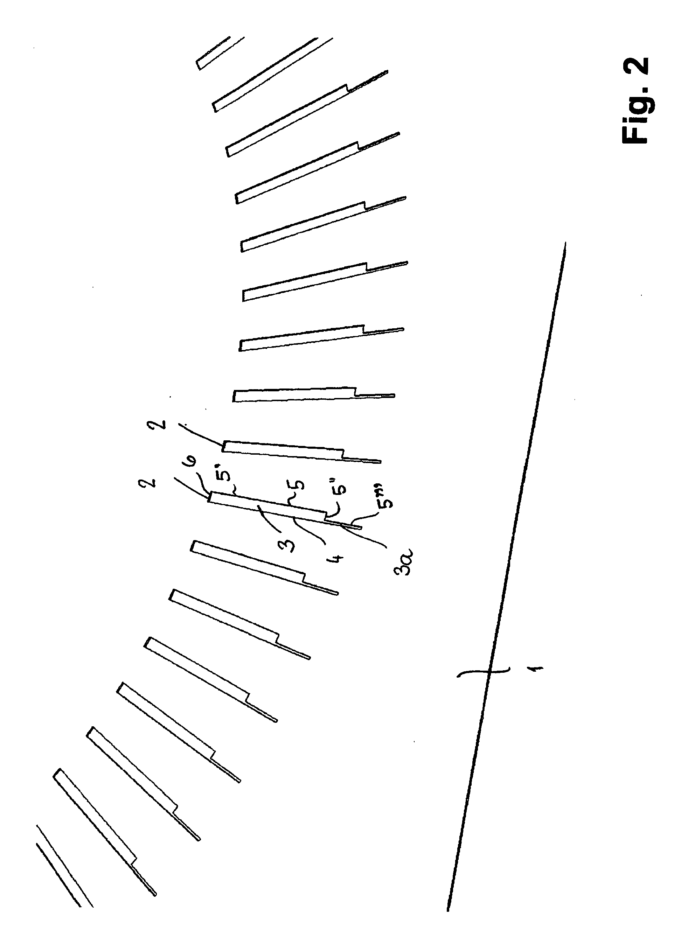

- Fig. 2: in vergrößerter Darstellung einen Teil der Blechtafel gemäß Fig. 1,
- Fig. 3: die Blechtafel gemäß Fig. 1, in die in einem zweiten Stanzschritt weitere Stanzschnitte eingebracht worden sind,
- Fig. 4: in vergrößerter Darstellung einen Teil der Blechtafel gemäß Fig. 3,
- Fig. 5: in perspektivischer Darstellung die Blechtafel gemäß den Fig. 1 bis 4, aus der Blechstücke senkrecht herausgebogen worden sind,
- Fig.6 und 7: jeweils in vergrößerter Darstellung einen Teil der Blechtafel gemäß Fig. 5,
- Fig. 8: in perspektivischer Darstellung ein aus der Blechtafel gemäß Fig. 5 herausgestanztes ringförmiges Statorblech,
- Fig. 9 und 10: in vergrößerter Darstellung Teile des Statorbleches gemäß Fig. 8,
- Fig. 11: in perspektivischer Darstellung ein Statorblechpaket, das zwei mit Abstand übereinander angeordnete Statorbleche gemäß Fig. 8 enthält, die zur Bildung von Lüftungskanälen eingesetzt werden,
- Fig. 12: in perspektivischer Darstellung ein Statorblech, das innerhalb des Statorblechpaketes gemäß Fig. 11 angeordnet ist,
- Fig. 13: in perspektivischer Darstellung eine zweite Ausführungsform eines erfindungsgemäßen Statorbleches,
- Fig. 14 und 15: jeweils in vergrößerter Darstellung verschiedene Bereiche des Statorbleches gemäß Fig. 13,
- Fig. 16: in perspektivischer Darstellung ein erfindungsgemäßes Rotorblech,
- Fig. 17: in perspektivischer Darstellung eine zweite Ausführungsform eines erfindungsgemäßen Rotorbleches,
- Fig. 18 und 19: jeweils in vergrößerter Darstellung unterschiedliche Bereiche eines erfindungsgemäßen Statorbleches, das als Ringsegment ausgebildet ist,
- Fig. 20: in perspektivischer Darstellung eine erfindungsgemäße Vorrichtung zur Herstellung der Stator- und Rotorbleche,
- Fig. 21: in schematischer Darstellung ein Biegewerkzeug der Vorrichtung gemäß Fig. 20 vor dem Biegevorgang,
- Fig. 22: das Biegewerkzeug gemäß Fig. 21 beim Biegevorgang.

### Ausführungsbeispiele :

Die Erfindung wird im Folgenden anhand verschiedener Stator- und Rotorblechausführungen erläutert. Die Bleche werden für Stator- und Rotorbleche von Generatoren und Elektromotoren eingesetzt, die insbesondere bei Wasser- und Windkraftanlagen Verwendung finden. Die Blechpakete sind mit Lüftungskanälen versehen, um die im Betrieb der mit solchen Paketen ausgestatteten Maschinen entstehende Wärme abführen zu können. Zur Bildung solcher Lüftungskanäle werden einzelne Bleche des Paketes so gestanzt, dass aus dem Material der Bleche Stege herausgebogen werden können, die als Abstandhalter zum benachbarten Blech innerhalb des Blechpaketes dienen. Durch die Stege werden die Lüftungskanäle gebildet, durch welche Luft zur Abfuhr der entstehenden Wärme geleitet werden kann. Die Stege sind einstückig mit dem Blech ausgebildet, wodurch sich ein einfaches Herstellverfahren ergibt.

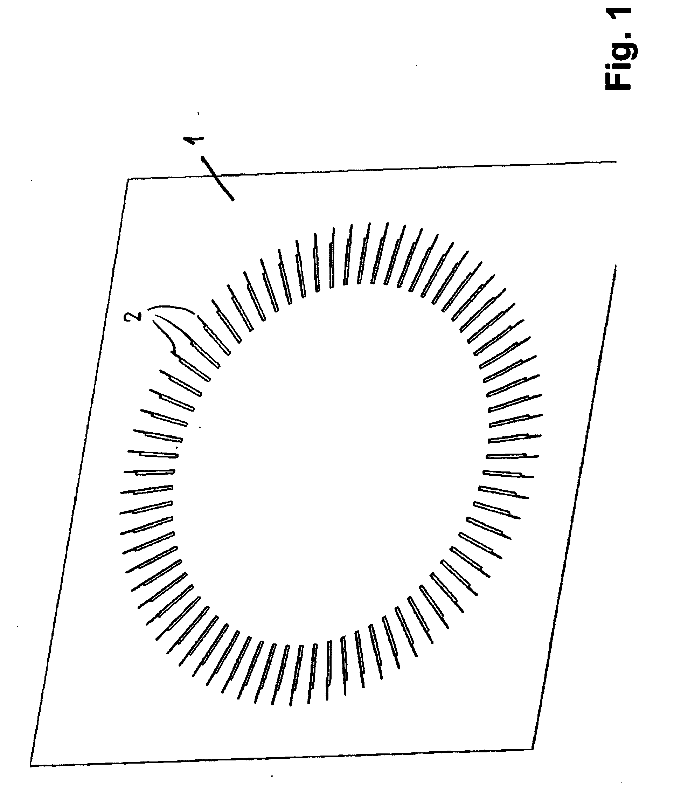

Als Ausgangsmaterial für die Stator/Rotorbleche wird ein Blech 1 verwendet, das von einem Coil abgewickelt werden kann, aber auch eine Blechtafel sein kann. In Fig. 1 ist eine Blechtafel dargestellt, in die in einem ersten Stanzschritt auf einem Kreis liegende radial verlaufende Schnitte 2 eingebracht werden. Sie sind über den Umfang des Kreises gleichmäßig verteilt angeordnet und untereinander gleich ausgebildet. Bei diesem ersten Stanzschritt werden rechteckförmige, radial verlaufende Ausnehmungen 3 gebildet, die am radial äußeren Ende in eine schmale, ebenfalls radial verlaufende Ausnehmung 3a übergehen. Die Ausnehmungen 3, 3a haben eine radial verlaufende, gemeinsame Schnittkante 4, während die in Umfangsrichtung gegenüberliegende Schnittkante 5 gestuft ausgebildet ist. Sie weist einen radial inneren Abschnitt 5' auf, der sich vom radial inneren Ende 6 der Ausnehmung 3 aus erstreckt und über eine rechtwinklige Stufe 5" in einen radial äußeren Abschnitt 5'" übergeht. Der radial äußere Abschnitt 5'" hat wesentlich kleineren Abstand von der gegenüberliegenden Schnittkante 4 als der radial innen liegende Abschnitt 5'.

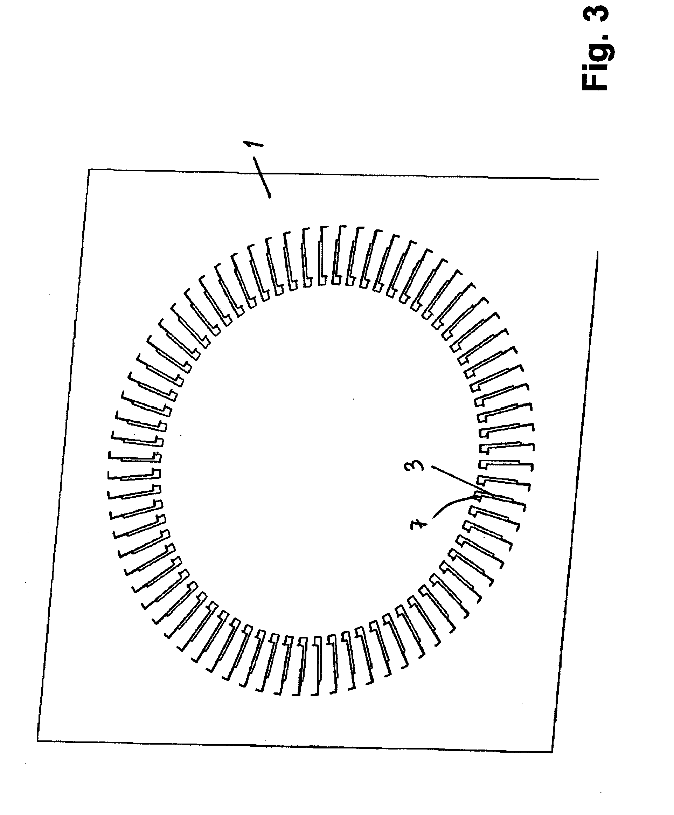

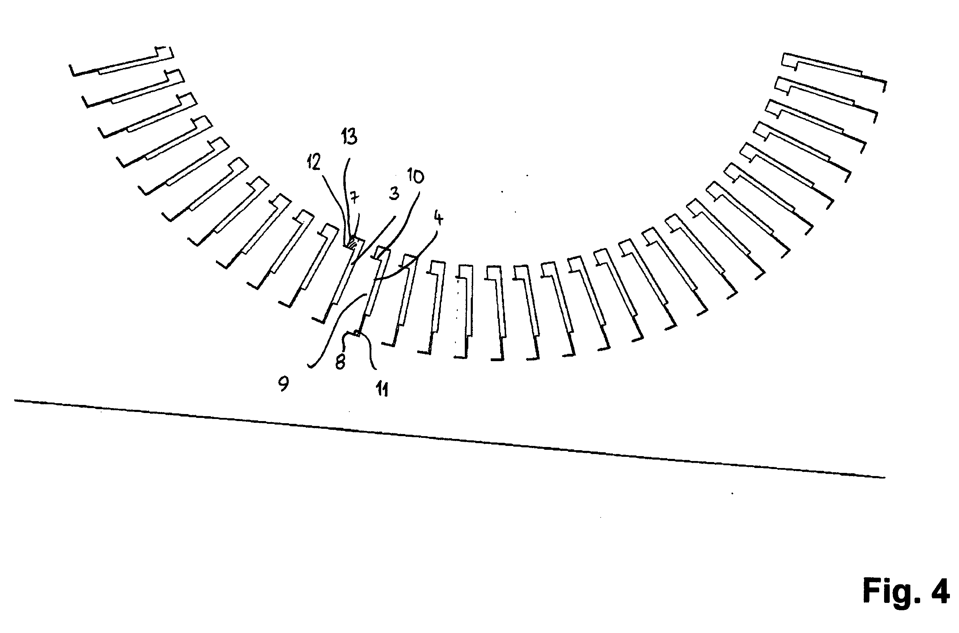

In einem zweiten Stanzschritt (Fig. 3 und 4) wird die Ausnehmung 3 am radial innen liegenden Ende in Umfangsrichtung durch einen entsprechenden Stanzschnitt verbreitert. In den Fig. 3 und 4 ist dieser verbreiterte Bereich der Ausnehmung 3 mit 7 bezeichnet.

Gleichzeitig wird bei diesem zweiten Stanzschritt am radial außen liegenden Ende der schmalen Ausnehmung 3a ein Schnitt 8 angebracht, der in Umfangsrichtung verläuft. Aufgrund des verbreiterten Bereiches 7 wird jeweils ein rechteckförmiges Blechstück 9 gebildet, dessen eine, radial verlaufende Längsseite durch die Schnittkante 4 gebildet wird. Das Blechstück 9 liegt noch in der Ebene des Bleches 1. Es wird in einem nachfolgenden Biegeschritt aus der Ebene des Bleches 1 herausgebogen.

Die radial innen liegende Schmalseite 10 des Blechstückes 9 begrenzt den verbreiterten Bereich 7. Die radial außen liegende Schmalseite 11 des Blechstückes 9 ist durch den Schnitt 8 gebildet. Um den Biegevorgang zu erleichtern, ist im zweiten Stanzschritt der Schnitt 12 an der radial innen liegenden Schmalseite 10 geringfügig in Umfangsrichtung verlängert, so dass er über die radiale Schmalseite 13 des verbreiterten Bereiches 7 der Ausnehmung 3 hinausragt.

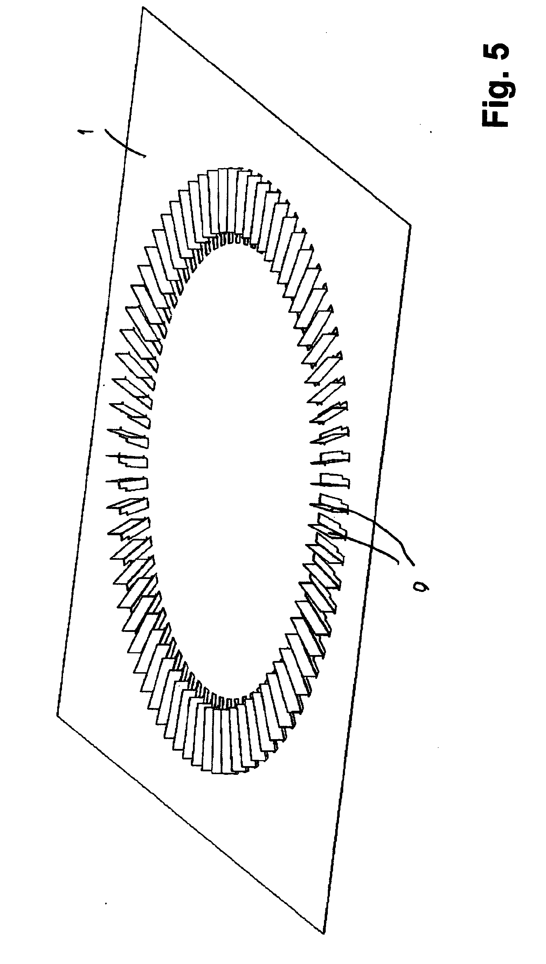

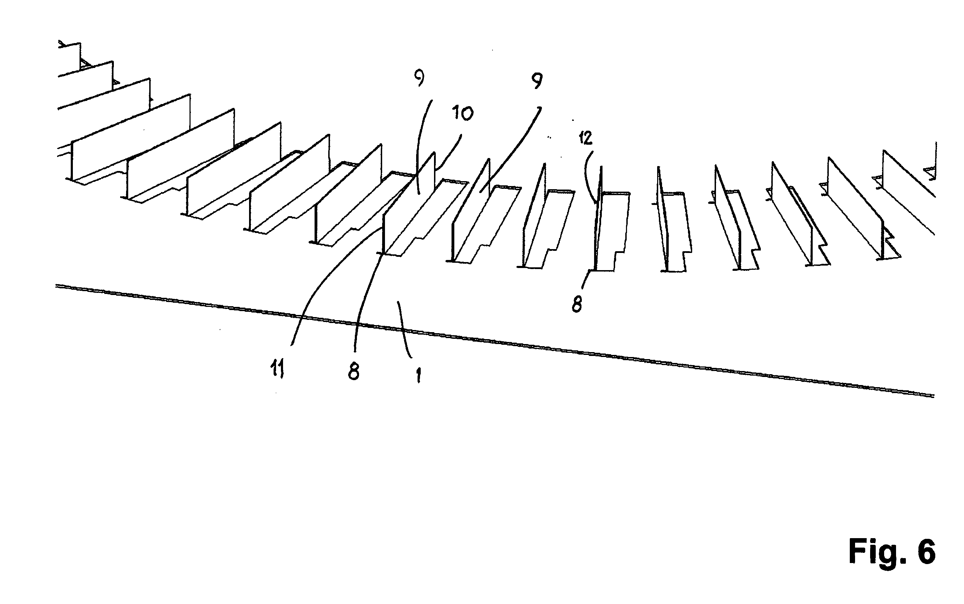

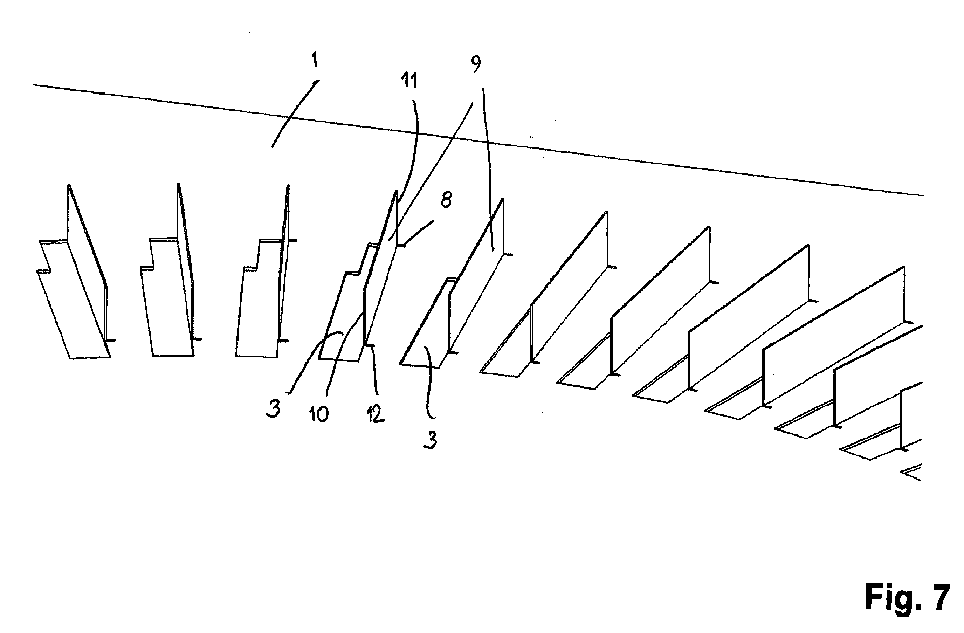

Wie sich aus den Fig. 5 bis 7 ergibt, wird das Blechstück 9 aus der Ebene des Bleches 1 senkrecht herausgebogen. Die Schnitte 8, 12 sind so vorgesehen, dass sie in Umfangsrichtung geringfügig über das hochgebogene Blechstück 9 verlaufen (Fig. 6 und 7).

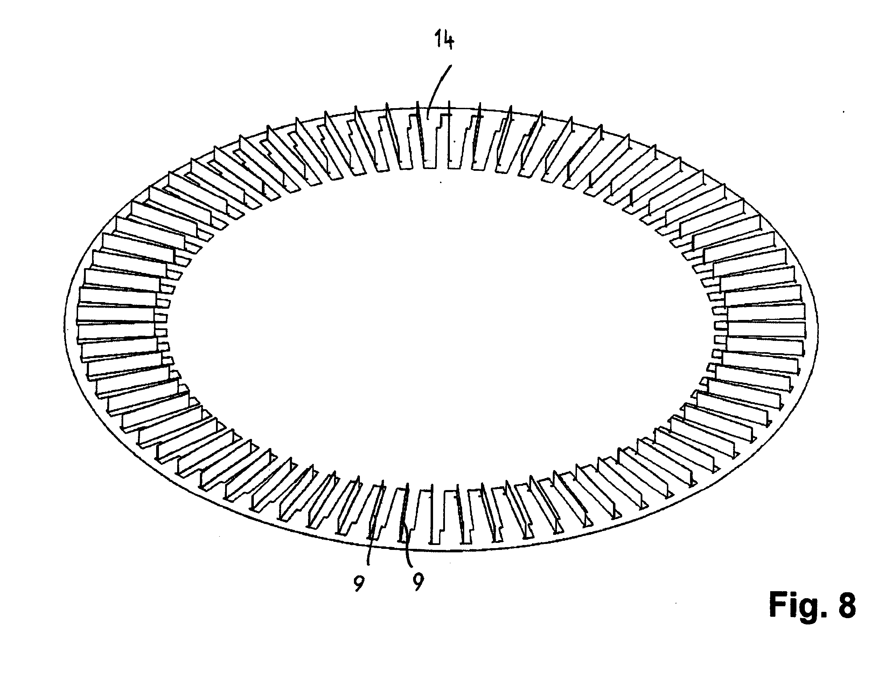

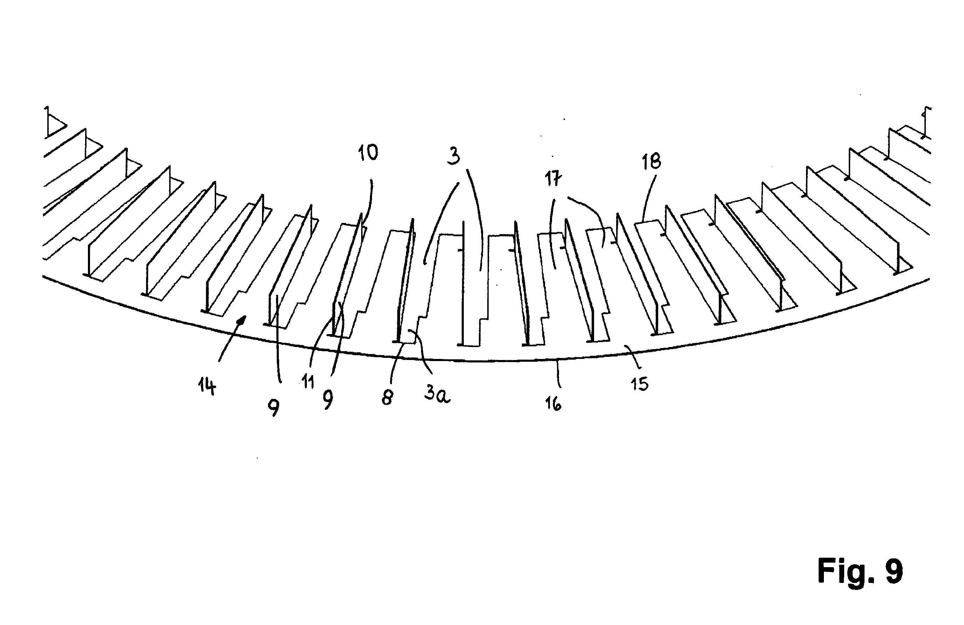

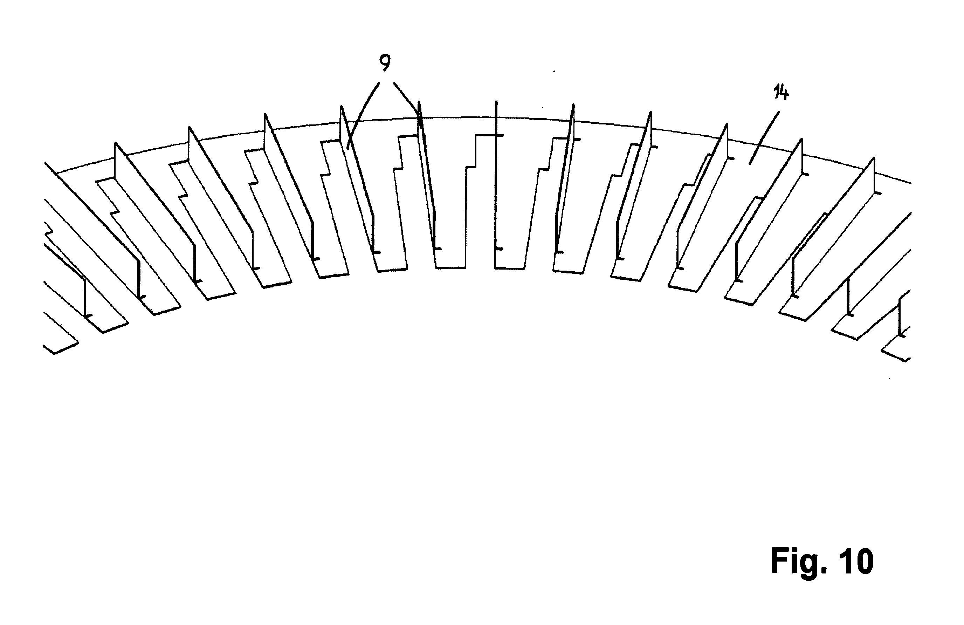

In wenigstens einem nachfolgenden Stanzschritt wird dann aus dem Blech 1 das Statorblech 14 gestanzt (Fig. 8 bis 10). Die beiden kreisförmigen Stanzschnitte liegen koaxial zueinander. Der innere kreisförmige Stanzschnitt wird so gelegt, dass die Ausnehmung 3 radial nach innen offen ist. Der äußere kreisförmige Stanzschnitt wird so ausgeführt, dass das Statorblech 14 einen äußeren umlaufenden Randabschnitt 15 aufweist. Die radial äußere Schmalseite 11 der hochgebogenen Blechstücke 9 liegt mit Abstand zum äußeren kreisförmigen Rand 16 des Statorbleches 14. Die in Umfangsrichtung in gleichen Abständen hintereinander liegenden Ausnehmungen 3 sind durch in der Blechebene liegende Stege 17 voneinander getrennt. Ihre freie Stirnseiten 18 liegen auf einem gemeinsamen, koaxial zum äußeren Rand 16 liegenden Kreis. Die radial innere Schmalseite 10 der Blechstücke 9 hat radialen Abstand von den freien Stirnseiten 18 der Stege 17. Die hochgebogenen Blechstücke 9 sind an einem radial verlaufenden Rand der Ausnehmungen 3 vorgesehen.

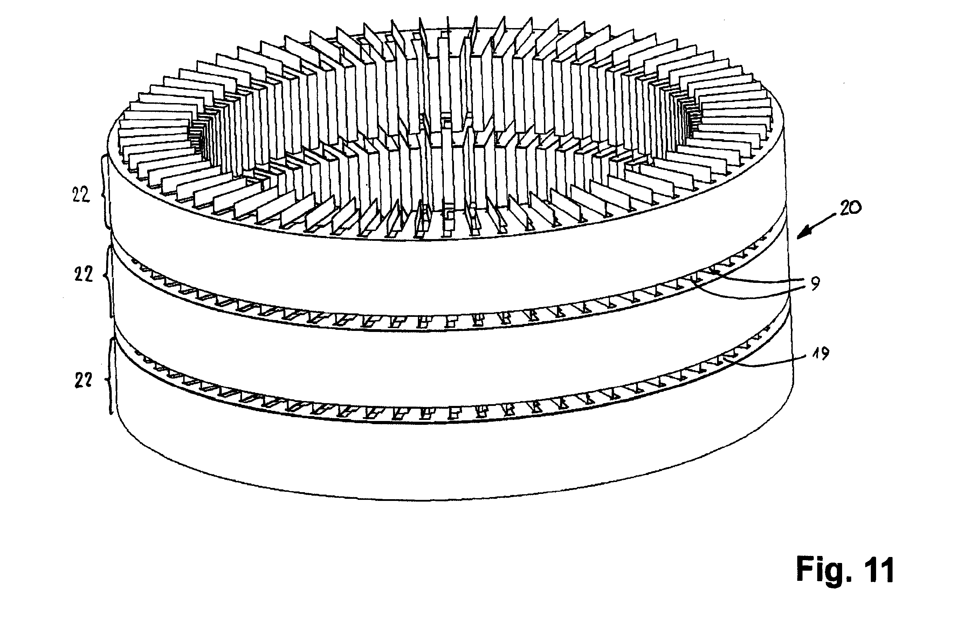

Die Blechstücke 9 bilden senkrecht zur Blechebene sich erstreckende Distanzstücke, mit denen innerhalb des Blechpaketes radial verlaufende Lüftungskanäle 19 (Fig. 11) gebildet sind. Infolge der symmetrischen Anordnung der hochgebogenen Blechstücke 9 ergeben sich innerhalb des jeweiligen Blechpaketes symmetrisch angeordnete Lüftungskanäle 19 (Fig. 11).

Fig. 11 zeigt beispielhaft einen Teil eines Blechpaketes 20, das in zwei mit Abstand übereinanderliegenden Ebenen über den Umfang gleichmäßig verteilt angeordnete Lüftungskanäle 19 aufweist. Sie trennen Blechpaketabschnitte 22 voneinander, die in bekannter Weise miteinander verbunden sind. Die axiale Höhe der Lüftungskanäle 19 wird durch die Höhe der Blechstücke 9 bestimmt. Die Lage der Blechstücke 9 bestimmt den Verlauf der Lüftungskanäle 19. Im Ausführungsbeispiel liegen die Blechstücke 9 jeweils in radialer Richtung. Dementsprechend verläuft auch die Mittelebene jedes Führungskanales 19 radial.

Je nach Anforderungen und/oder Einbaugegebenheiten weist das Blechpaket 20 die zur Abführung der Wärme notwendige Zahl von Lüftungskanälen 19 auf. Im Bereich zwischen den übereinanderliegenden Lüftungskanälen 19 sind die Blechlamellen innerhalb der Blechpaketabschnitte 22 in bekannter Weise fest miteinander verbunden. So können aufeinanderliegende Blechlamellen formschlüssig miteinander verbunden werden, indem die Blechlamellen mit Ausprägungen versehen sind. Dadurch sind die Blechlamellen auf der einen Seite mit den vorstehenden Ausprägungen und an der anderen Seite mit entsprechenden Vertiefungen versehen. Auf diese Weise können die Blechlamellen so aufeinandergesetzt werden, dass die Ausprägungen in die Vertiefungen der jeweils benachbarten Blechlamelle eingreifen. Die Blechlamellen können zusätzlich mit Schrauben oder dergleichen fest miteinander verbunden werden. Es ist weiter möglich, aufeinanderliegende Blechlamellen beispielsweise durch eine Klebeverbindung fest miteinander zu verbinden. In diesem Falle müssen die Blechlamellen nicht verformt werden.

Die Blechpakete 20 werden in geeigneter Weise mit Wicklungen versehen und in der Regel getränkt. Während des Einsatzes der mit den Blechpaketen 20 ausgestatteten Elektromotoren oder Generatoren strömt durch die Lüftungskanäle 19 Luft, die Wärme vom Blechpaket 20 aufnimmt und an die Umgebung abgibt. Dadurch ist eine wirkungsvolle Kühlung des Blechpaketes 20 im Betrieb sichergestellt. Der Abstand der übereinanderliegenden Lüftungskanäle 19 wird so gewählt, dass die Wärme über den gesamten Umfang und über die gesamte Höhe des Blechpaketes 20 optimal abgeführt werden kann.

Das Blechpaket 20 lässt sich bei der Montage durch einfaches Stapeln der Blechpaketabschnitte 22 herstellen, die anschließend in bekannter Weise miteinander verbunden werden. Mit den hochgebogenen Blechstücken 9 lässt sich einfach sicherstellen, dass sich die Lüftungskanäle 19 von Stator und Rotor auf gleicher Höhe befinden.

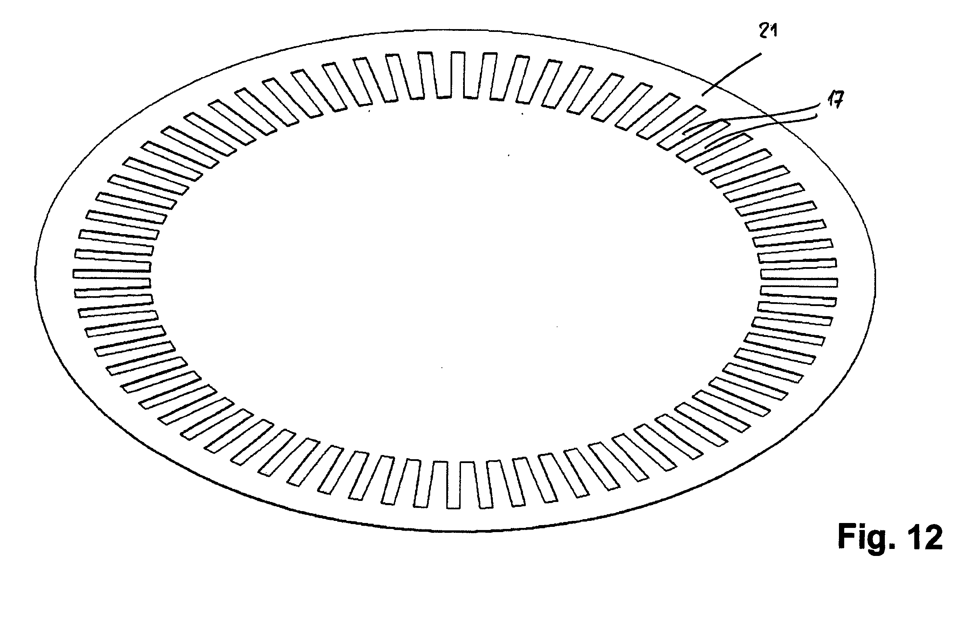

Fig. 12 zeigt beispielhaft ein Statorblech 21, das keine hochgestellten Blechstücke, sondern lediglich die radial verlaufenden Stege 17 aufweist. Mit solchen Blechen 21 werden die einzelnen, zwischen den übereinanderliegenden Lüftungskanälen 19 liegende Blechpaketabschnitte 22 (Fig. 11) gebildet.

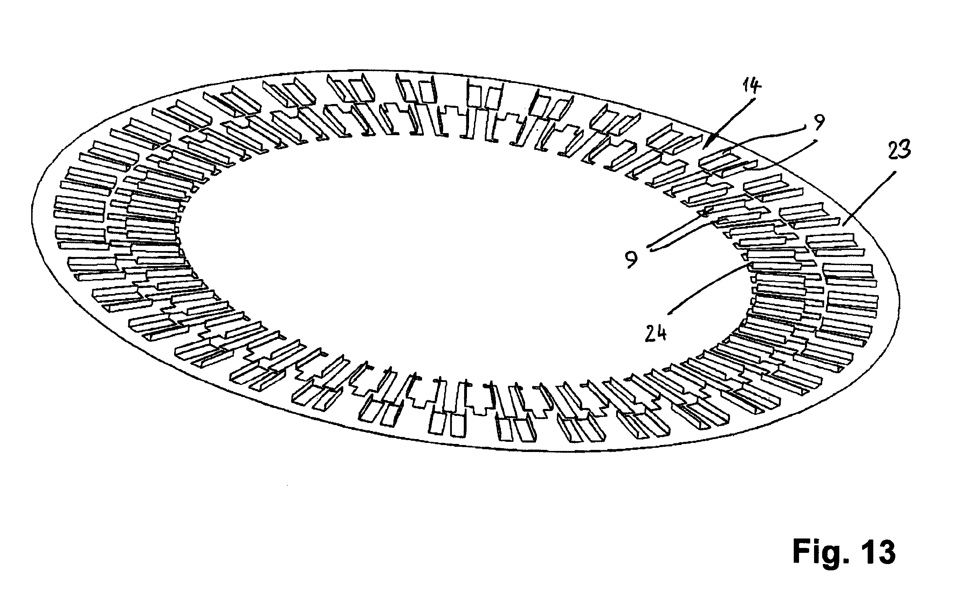

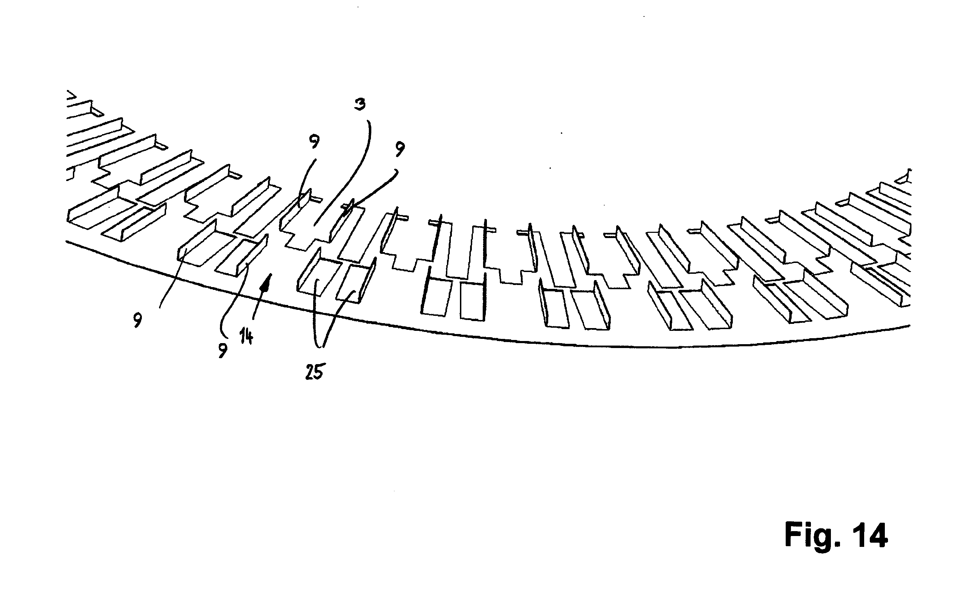

Die Fig. 13 bis 15 zeigen ein Statorblech 14, das mit zwei koaxial zueinander liegenden Biegereihen 23, 24 versehen ist, die jeweils die hochgestellten Blechstücke 9 aufweisen.

Die äußere Biegereihe 23 weist jeweils zwei mit geringem Abstand in Umfangsrichtung nebeneinander liegende Ausnehmungen 25 auf, die im Ausführungsbeispiel rechteckigen Umriss haben. Die Längsmittelebene dieser Ausnehmungen 25 liegt jeweils radial. An den voneinander abgewandten, radial verlaufenden Längsseiten 26 der Ausnehmungen 25 befindet sich jeweils ein aus der Ebene des Statorbleches 14 senkrecht heraus gebogenes Blechstück 9, das sich über die ganze Länge dieser Längsseite 26 erstreckt. Die Höhe der Blechstücke 9 richtet sich nach der Ausbildung des Stators und/oder nach den Einbaugegebenheiten.

Die Ausnehmungen 25 sind paarweise vorgesehen, wobei der in Umfangsrichtung gemessene Abstand der Ausnehmungen 25 des Paares kleiner ist als der umfangsseitige Abstand zwischen nebeneinander liegenden Paaren von Ausnehmungen 25. Die Ausnehmungen 25 haben vorteilhaft gleiche Abmessungen.

Die innere Biegereihe 24 hat ebenfalls die hochgestellten Blechstücke 9, die jeweils in der gleichen radial verlaufenden Ebene liegen wie die Blechstücke 9 der äußeren Biegereihe 23. Dabei liegen die in der gleichen Ebene liegenden Blechstücke 9 mit geringem radialen Abstand hintereinander. Die Blechstücke 9 der inneren Biegereihe 24 sind an den voneinander abgewandten, radial verlaufenden Längsseiten 27, 28 der Ausnehmungen 3 vorgesehen. Wie beim vorigen Ausführungsbeispiel sind die Ausnehmungen 3 radial nach innen offen. Im Unterschied zur vorigen Ausführungsform werden die Ausnehmungen 3 radial innen durch in Umfangsrichtung verlaufende gegeneinander gerichtete schmale Nasen 29, 30 teilweise geschlossen.

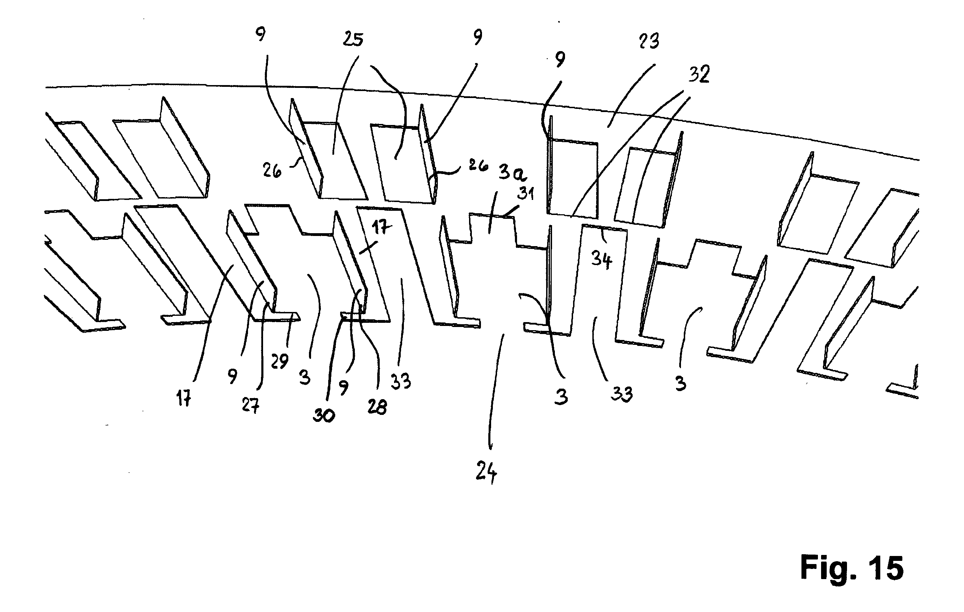

An dem den Nasen 29, 30 radial gegenüberliegenden Bereich befindet sich die kleinere Ausnehmung 3a, die rechteckigen Umriss hat und die symmetrisch zur Ausnehmung 3 liegt. Die Ausnehmung 3a liegt, in Radialrichtung gesehen, mittig zwischen den hochgestellten Blechstücken 9 benachbarter Ausnehmungspaare 25 der äußeren Biegereihe 23 (Fig. 15). Der die Ausnehmung 3a begrenzende, in Umfangsrichtung verlaufende Rand 31 hat, in Umfangsrichtung des Statorbleches 14 gesehen, radialen Abstand von den radial innen liegenden Schmalseiten 32 der Ausnehmungen 25.

Zwischen benachbarten Ausnehmungen 3 befinden sich weitere Ausnehmungen 33, die jeweils rechteckigen Umriss haben und deren Längsmittelebenen in Axialebenen des Statorbleches 14 liegen. Die Ausnehmungen 33 sind radial nach innen offen. Radial nach außen sind sie durch einen Rand 34 begrenzt, der geringen radialen Abstand von den Schmalseiten 32 des Ausnehmungspaares 25 der äußeren Biegereihe 23 hat. Die Ausnehmungen 33 haben in Radialrichtung konstante Breite. In Radialrichtung liegt die Ausnehmung 33 mittig zu den zugehörigen radial äußeren Ausnehmungspaaren 25. Außerdem liegen die Ausnehmungen 33 mittig zu in Umfangsrichtung benachbarten Ausnehmungen 3. Die radial verlaufenden Stege 17, welche die Ausnehmungen 3 in Umfangsrichtung begrenzen und an deren freie Enden rechtwinklig die Nasen 29, 30 anschließen, begrenzen auch die Ausnehmungen 33 in Umfangsrichtung.

Die hochgebogenen Blechstücke 9 bilden wiederum die Distanzstücke, durch welche die Höhe der Lüftungskanäle19 innerhalb des Blechpaketes 20 bestimmt wird. Da die Blechstücke 9 der Ausnehmungen 25 und der Ausnehmungen 3 in Radialrichtung jeweils fluchtend hintereinander liegen, werden die einzelnen Blechpaketabschnitte 22, die durch die Lüftungskanäle 19 voneinander getrennt werden, einwandfrei abgestützt. Die Blechstücke 9 lassen sich in der beschriebenen Weise aus dem Blech in einfacher Weise hochbiegen. Wie bei der vorigen Ausführungsform ist es nicht erforderlich, die Distanzstücke zur Bildung der Lüftungskanäle am jeweiligen Blech zu befestigen. Dadurch entfallen die aufwendigen, beim Stand der Technik notwendigen Verfahrensschritte, um die Distanzstücke mit dem jeweiligen Blech zu verbinden. Die Blechstücke 9 sind beim Ausführungsbeispiel nach den Fig. 13 bis 15 in beiden Biegereihen 23, 24 jeweils u-förmig angeordnet. In beiden Biegereihen 23, 24 sind die Blechstücke 9 symmetrisch angeordnet.

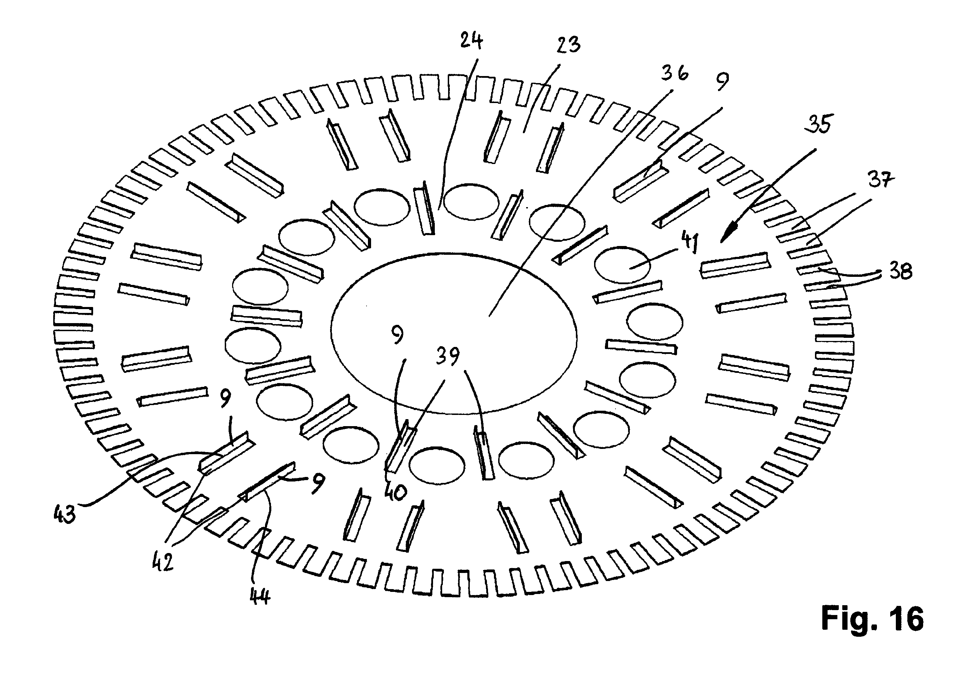

Fig. 16 zeigt ein Rotorblech 35, das ringförmig ausgebildet ist und eine zentrale kreisförmige Öffnung 36 aufweist. Am äußeren Rand ist das Rotorblech 35 mit radial nach außen verlaufenden Zähnen 37 versehen, die in Umfangsrichtung des Rotorbleches 35 mit gleichem Abstand zueinander angeordnet sind. Die Zähne 37 haben rechteckförmigen Umriss und begrenzen in Umfangsrichtung zwischen ihnen liegende rechteckige Nuten 38. Ihre Breite ist geringer als die Breite der Zähne 37.

Im Bereich zwischen der zentralen Öffnung 36 und den umfangsseitigen Zähnen 37 befinden sich die hochgebogenen Blechstücke 9, die wie beim vorigen Ausführungsbeispiel in zwei Biegereihen 23 und 24 liegen. Die beiden Biegereihen 23, 24 liegen koaxial zueinander sowie zur Öffnung 36. Die innere Biegereihe 24 weist radial liegende, rechteckförmige Ausnehmungen 39 auf, deren Längsachsen jeweils radial verlaufen. An ihrem einen Längsrand 40 befindet sich das rechtwinklig hochgebogene Blechstück 9. Die Länge der Blechstücke 9 entspricht der Länge des Längsrandes 40. Die Ausnehmungen 39 haben Abstand vom Rand der zentralen Öffnung 36. Die hochgebogenen Blechstücke 9 befinden sich bei jeder Ausnehmung 39 am gleichen Längsrand 40. Zwischen den Ausnehmungen 39 ist jeweils wenigstens eine kreisförmige Ausnehmung 41 vorgesehen, deren Durchmesser kleiner ist als die Länge des Längsrandes 40 der Ausnehmungen 39. Die Ausnehmungen 41 liegen vorteilhaft in halber Breite zwischen benachbarten Ausnehmungen 39. Die Ausnehmungen 41 sind in Radialrichtung so relativ zu den Ausnehmungen 39 versetzt angeordnet, dass die Ausnehmungen 41 geringfügig in Radialrichtung über die Ausnehmungen 39 in Richtung auf die äußere Biegereihe 23 vorstehen.

Die äußere Biegereihe 23 weist rechteckförmige Ausnehmungen 42 auf, die jeweils paarweise über den Umfang des Rotorbleches 35 angeordnet sind. An den voneinander abgewandten Längsrändern 44 der beiden Ausnehmungen 42 eines Ausnehmungspaares sind die Blechstücke 9 rechtwinklig abgebogen. Dadurch ergibt sich eine u-förmige Anordnung der Blechstücke 9, bezogen auf die beiden Ausnehmungen 42 jedes Ausnehmungspaares. Die Längsachsen der Ausnehmungen 42 liegen unter einem spitzen Winkel zueinander sowie spitzwinklig zur zugehörigen Radialen des Rotorbleches 35. Der Abstand zwischen den Blechstücken 9 jedes Ausnehmungspaares ist kleiner als der Abstand zwischen in Umfangsrichtung benachbarten Ausnehmungspaaren. Die Blechstücke 9 der Ausnehmungen 42 haben wie die Blechstücke 9 der Ausnehmungen 39 gleiche Länge wie der zugehörige Längsrand 43, 44 der Ausnehmungen 42.

Zwischen den Blechstücken 9 der beiden Biegereihen 23, 24 besteht ein radialer Abstand. Auch haben die Blechstücke 9 und damit die Ausnehmungen 42 der äußeren Biegereihe 23 Abstand von den umfangsseitigen Zähnen 37 und Nuten 38 des Rotorbleches 35.

Bei einer solchen Gestaltung des Rotorbleches 35 lassen sich innerhalb des Rotorblechpaketes an den gewünschten Stellen die Lüftungskanäle in einfacher Weise vorsehen, mit denen eine radiale Belüftung des Rotorblechpaketes gewährleistet wird. Die einzelnen Lüftungskanäle sind über den Umfang des Rotorblechpaketes verteilt angeordnet, so dass die im Betrieb des Elektromotors bzw. Generators entstehende Wärme optimal aus dem Rotorblechpaket abgeführt werden kann.

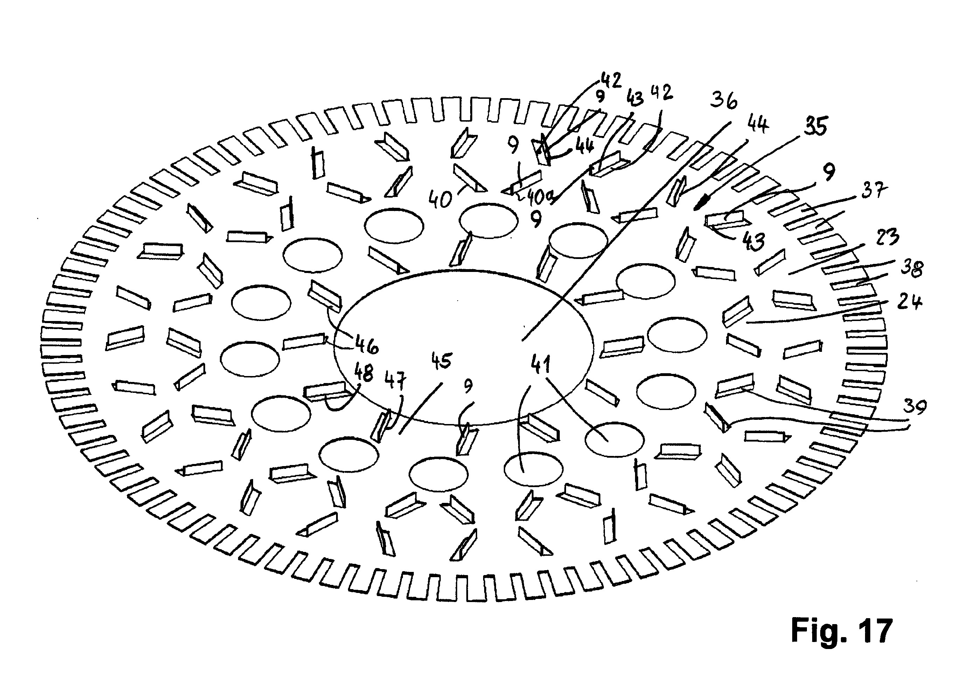

Fig. 17 zeigt ein weiteres Ausführungsbeispiel eines ringförmigen Rotorbleches 35, bei dem die hochgebogenen Blechstücke 9 in drei koaxial zueinander sowie zur mittigen Öffnung 36 liegenden Biegereihen 23, 24, 45 angeordnet sind. Dieses weitere Ausführungsbeispiel soll belegen, dass hinsichtlich der Gestaltung der einzelnen Bleche der Hersteller der entsprechenden Blechpakete freie Hand hat, um im Hinblick auf die Gestaltung des jeweiligen Blechpaketes und/oder die Einsatzbedingungen des Elektromotors die optimale Wärmeabfuhr sicherzustellen.

Die äußere Biegereihe 23 hat die rechteckigen Ausnehmungen 42, an deren einem Längsrand 43, 44 jeweils ein Blechstück 9 rechtwinklig abgebogen ist. Die Ausnehmungen 42 sind in gleichen Abständen längs des Umfanges des Rotorbleches 35 vorgesehen. Dabei sind die Blechstücke 9 abwechselnd am einen und am anderen Längsrand 43, 44 der Ausnehmungen 42 vorgesehen. Benachbarte Ausnehmungen 42 liegen jeweils spitzwinklig zueinander, wobei in Umfangsrichtung des Rotorbleches 35 die Ausnehmungen 42 abwechselnd konvergierend und divergierend zueinander angeordnet sind. Sämtliche Ausnehmungen 42 sind gleich ausgebildet und haben jeweils Abstand von den umfangsseitigen Zähnen 37 und Nuten 38 sowie von der mittleren Biegereihe 24. Die Blechstücke 9 der äußeren Biegereihe 23 sind jeweils u-förmig zueinander angeordnet und haben gleiche Länge wie der zugehörige Längsrand 43, 44 der Ausnehmungen 42.

Die Ausnehmungen 39 der mittleren Biegereihe 24 sind ebenfalls rechteckförmig ausgebildet, wobei benachbarte Ausnehmungen 39 abwechselnd konvergierend und divergierend zueinander angeordnet sind. Die Ausnehmungen 39 sind dabei so in Bezug auf die Ausnehmungen 42 der äußeren Biegereihe 23 angeordnet, dass in Richtung auf die Öffnung 36 konvergierend verlaufende Ausnehmungen 39 den divergierend in Richtung auf die Öffnung 36 verlaufenden Ausnehmungen 42 der äußeren Biegereihe 23 zugeordnet sind.

Die Blechstücke 9 der mittleren Biegereihe 24 sind in Umfangsrichtung abwechselnd an den beiden Längsrändern 40, 40a der Ausnehmungen 39 vorgesehen. Die Biegestücke 9 haben gleiche Länge wie die Längsränder 40, 40a der Ausnehmungen 39. Im dargestellten Ausführungsbeispiel haben die Ausnehmungen 39 und 42 in vorteilhafter Weise gleiche Länge. Grundsätzlich können die Ausnehmungen 39, 42 und/oder die Blechstücke 9 der beiden Biegereihen 23, 24 auch unterschiedlich lang sein.

Im Bereich zwischen der mittleren Biegereihe 24 und der inneren Biegereihe 45 befinden sich die kreisförmigen Ausnehmungen 41, die über den Umfang des Rotorbleches 35 gleichmäßig verteilt angeordnet sind. Sie dienen wie die Ausnehmungen 41 der Ausführungsform gemäß Fig. 16 zur Aufnahme von Verbindungsbolzen oder als sogenannte Luftlöcher.

Die innere Biegereihe 45 hat die rechteckförmigen Ausnehmungen 46, die über den Umfang des Rotorbleches 35 gleichmäßig verteilt angeordnet sind. Die Blechstücke 9 sind ähnlich wie die Blechstücke 9 der Biegereihen 23, 24 u-förmig angeordnet, indem sie abwechselnd vom einen und vom anderen Längsrand der Ausnehmungen 46 abstehen. Die Biegestücke 9 sind gleich lang wie die zugehörigen Längsränder 47, 48 der Ausnehmungen 46, die radialen Abstand von der zentralen Öffnung 36 sowie den Ausnehmungen 41 haben. Die Ausnehmungen 46 und die zugehörigen Blechstücke 9 sind in Umfangsrichtung abwechselnd so angeordnet, dass benachbarte Ausnehmungen 46 abwechselnd konvergierend und divergierend zueinander angeordnet sind.

Infolge der divergierend und konvergierend verlaufenden Blechstücke 9 ergibt sich, in Radialrichtung gesehen, eine effektive Breite der Blechstücke 9, die wesentlich größer ist als die Blechstärke der Blechstücke 9. Innerhalb des Blechpaketes 20 werden darum die auf den Blechstücken aufliegenden Blechpaketabschnitte 22 optimal abgestützt.

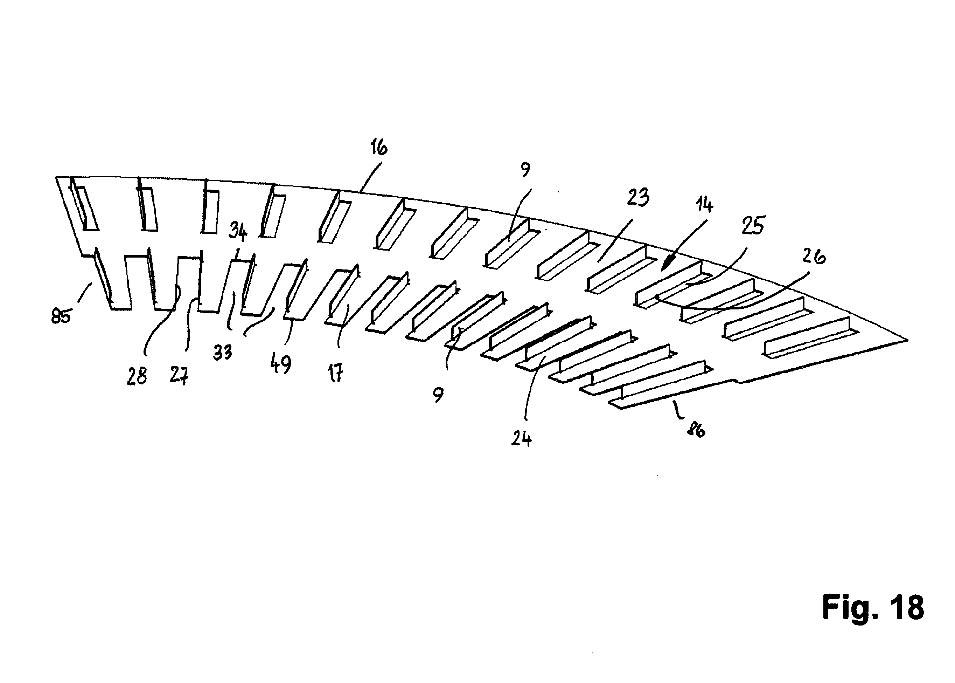

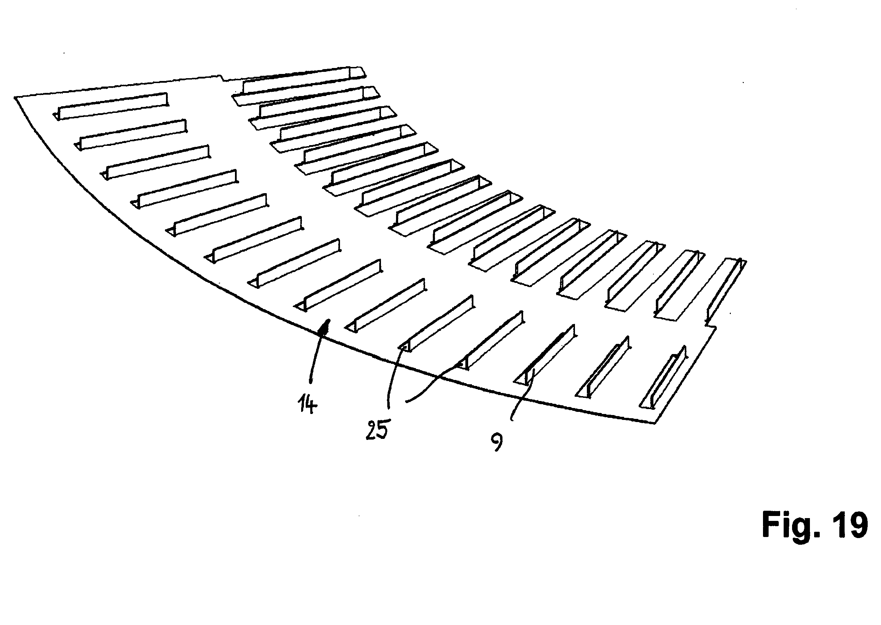

Die Fig. 18 und 19 zeigen ein ringsegmentförmiges Statorblech 14, bei dem die Blechstücke 9 in zwei koaxial zueinander liegenden Biegereihen 23, 24 angeordnet sind. Die äußere Biegereihe 23 hat die in Umfangsrichtung gleichmäßig verteilt angeordneten rechteckförmigen Ausnehmungen 25, deren Längsachsen jeweils radial verlaufen. Die Blechstücke 9 sind jeweils an der gleichen Längsseite 26 der Ausnehmungen 25 vorgesehen. Die Blechstücke 9 sind gleich lang wie die Längsseiten 26. Die Ausnehmungen 25 haben radialen Abstand vom äußeren Rand 16 des Statorbleches 14 sowie von der inneren Biegereihe 24.

Die radial innere Biegereihe 24 hat die Stege 17, die in gleichmäßigem Abstand über den Umfang des Statorbleches 14 verteilt angeordnet sind und deren in Umfangsrichtung gemessene Breite radial nach innen abnimmt. Die Stege 17 sind durch die Ausnehmungen 33 voneinander getrennt, die radial nach innen offen sind. Die Ausnehmungen 33 werden durch die gegenüberliegenden Längsseiten 27, 28 benachbarter Stege 17 begrenzt. Die Blechstücke 9, die aus dem Statorblech 14 rechtwinklig herausgebogen sind, befinden sich an den Längsseiten 27 jedes Steges 17. Die Längsseiten 27, 28 benachbarter Stege 17 sind wie beim Ausführungsbeispiel gemäß den Fig. 13 bis 15 durch den Rand 34 miteinander verbunden. Die Stirnseiten 49 der Stege 17 liegen auf einem Kreis um die Achse des Statorbleches 14. Die Stege 17 sind jeweils gleich ausgebildet. Auch die Ausnehmungen 33 haben untereinander gleiche Form.

Die Blechstücke 9 der beiden Biegereihen 23, 24 liegen jeweils auf der gleichen Radialen des Statorbleches 14. Die Blechstücke 9 der inneren Biegereihe 24 sind im Unterschied zu den Blechstücken 9 der äußeren Biegereihe 23 kürzer als die zugehörige Längsseite 27 der Stege 17. Die Blechstücke 9 der inneren Biegereihe 24 haben Abstand von den Stirnseiten 49 der Stege 17 sowie von den Rändern 34 der Ausnehmungen 33.

Die Ränder 34 der Ausnehmungen 33 haben radialen Abstand von den Ausnehmungen 25 der äußeren Biegereihe 23. Da die Blechstücke 9 der beiden Biegereihen 23, 24 jeweils auf der gleichen Radialen liegen, werden die innerhalb des Blechpaketes 20 übereinander liegenden Blechpaketabschnitte 22 unter Bildung der Lüftungskanäle 19 zuverlässig gegeneinander abgestützt. Die Blechstücke 9 der beiden Biegereihen 23, 24 bilden über die radiale Breite des Statorbleches 14 radial verlaufende Lüftungskanäle 19, die lediglich durch die schmalen Blechstücke 9 teilweise voneinander in Umfangsrichtung getrennt sind. Im Einsatz des Stators ist dadurch eine gute Wärmeableitung gewährleistet.

Die ringsegmentförmigen Statorbleche 14 werden in bekannter Weise zu ringförmigen Statorblechen zusammengefügt. Die Statorbleche 14 sind so ausgebildet, dass sie an ihren beiden Enden jeweils einen in Höhe der inneren Biegereihe 24 liegenden, nach innen weisenden Absatz 85, 86 aufweisen. Er ist in halber Breite der entsprechenden Ausnehmungen 33 vorgesehen, so dass sich beim Zusammenfügen der Blechsegmente 14 die gleichmäßige Verteilung der Ausnehmungen 33 über den Umfang ergibt.

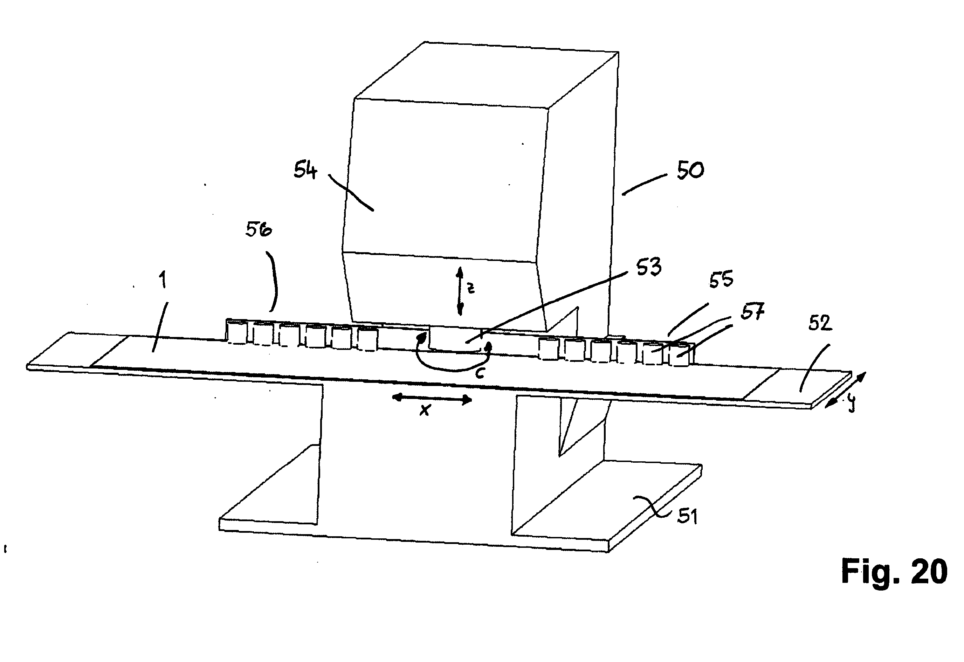

Die Fig. 20 bis 22 zeigen beispielhaft eine Vorrichtung, mit der die beschriebenen Blechteile einfach und kostengünstig hergestellt werden können.

Die Vorrichtung hat einen Maschinentisch 52, auf dem sich ein Blech 1 befindet. Der Maschinentisch 52 ist mit einem (nicht dargestellten) Werkzeugunterteil inklusive einer Matrize versehen, das sich unterhalb des Bleches 1 befindet. Die Vorrichtung ist weiter mit einem Werkzeugoberteil 53 inklusive einem Stempel versehen. Das Werkzeugoberteil 53 ist in Richtung der z-Achse bewegbar sowie um die c-Achse drehbar. Das Werkzeugoberteil 53 befindet sich an einem Maschinenoberteil 54, der mit Abstand oberhalb des Maschinentisches 52 liegt und ihn zumindest teilweise übergreift.

Längs des Maschinentisches 52 befindet sich ein Werkzeugmagazin 55, in dem die zur Bearbeitung des Bleches 1 erforderlichen Werkzeuge gelagert sind. Die Werkzeuge 57 sind in Fig. 20 nur schematisch dargestellt. Sie werden an einem Werkzeugwechselplatz 56 in das Werkzeugmagazin 55 eingesetzt beziehungsweise dem Werkzeugmagazin 55 entnommen. Zum Ein- und Auswechseln der Werkzeuge 57 können übliche Wechsler eingesetzt werden. Solche Wechsler sind bekannt und werden darum auch nicht näher erläutert.

Das Blech 1 wird längs der x- und y-Achsen auf dem Maschinentisch 52 verschoben. Mit dem entsprechenden Werkzeug 57 werden die Stanzschnitte und Biegevorgänge durchgeführt.

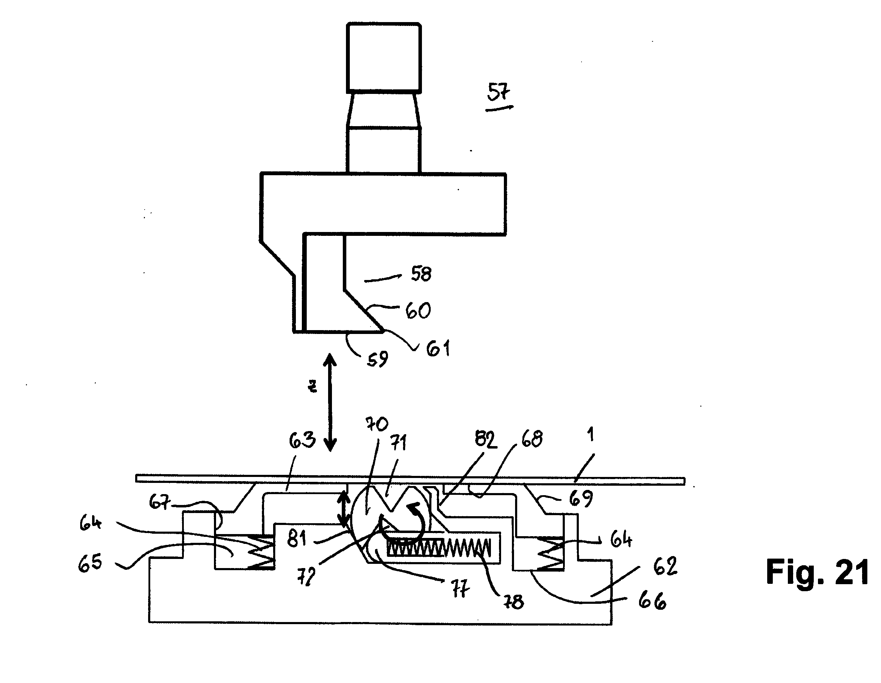

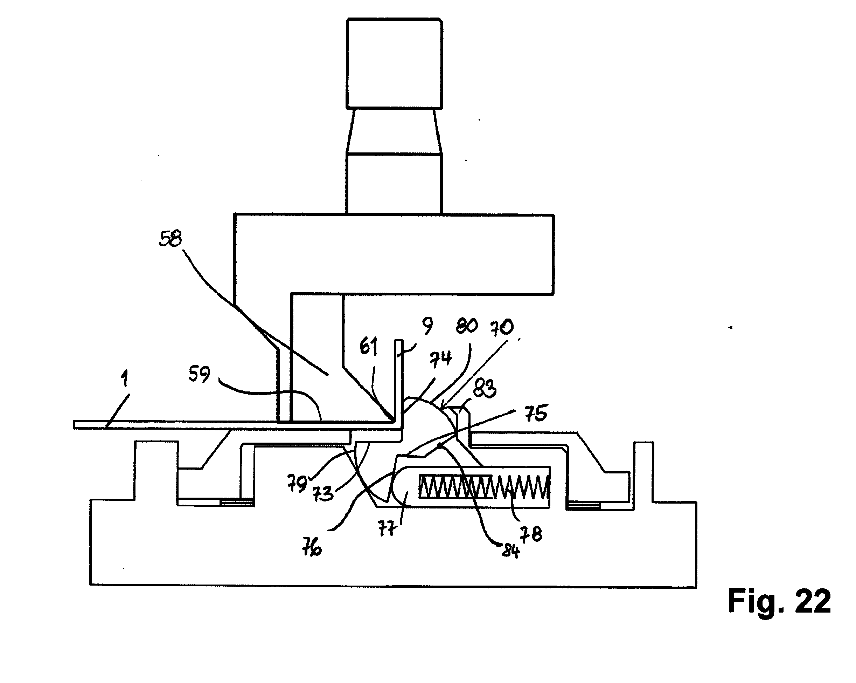

Die Fig. 21 und 22 zeigen eine beispielhafte Ausbildung eines Werkzeuges, mit dem aus dem Blech 1 die Blechstücke 9 herausgebogen werden. Das Werkzeug 57 hat einen Biegestempel 58, der in bekannter Weise eine ebene Niederhaltefläche 59 aufweist, mit der der Biegestempel 58 beim Biegevorgang flächig auf dem Blech 1 aufliegt (Fig. 22). An die Niederhaltefläche 59 schließt spitzwinklig eine Brustfläche 60 an. Der Übergang 61 zwischen den beiden Flächen 59, 60 bildet eine Biegekante 61.

Unterhalb des Bleches 1 befindet sich eine Matrize 62, die im Maschinentisch 52 untergebracht ist. In der Matrize 62 ist wenigstens eine Leiste 63 untergebracht, die unter der Kraft wenigstens einer Druckfeder 64 steht. Sie belastet die Leiste 63 in Richtung auf das Blech 1. Der Maschinentisch 52 ist mit einer Öffnung versehen, durch die die Leiste 63 unter der Kraft der Druckfeder 64 ragt. Die Leiste 63 ist in einer Vertiefung 65 der Matrize 62 untergebracht. Die Druckfeder 64 stützt sich am Boden 66 der Vertiefung 65 ab. Die Leiste 63 ist mit ihrem äußeren Rand an der Seitenwand 67 der Vertiefung 65 geführt.

Die Leiste 63 hat eine ebene Auflagefläche 68, auf der das Blech 1 beim Biegevorgang aufliegt. An die Auflagefläche 68 schließt stumpfwinklig eine Außenseite 69 an. Sie verhindert, dass die Leiste 63 durch die Öffnung im Maschinentisch 52 vollständig nach außen gedrückt werden kann. Die Matrize 62 ist mit einer Biegerolle 70 versehen, die um eine horizontale Achse drehbar ist. Die Biegerolle 70 weist etwa diametral einander gegenüberliegend zwei Vertiefungen 71, 72 auf, deren Wandungen 73, 74 und 75, 76 (Fig. 22) im Ausführungsbeispiel rechtwinklig zueinander liegen. Die Biegerolle 70 ist in Richtung ihrer Drehachse so lang, dass am Blech 1 die Blechstücke 9 in den unterschiedlichsten Längen gebogen werden können.

In die Vertiefung 72 ragt wenigstens ein Stößel 77, der unter der Kraft wenigstens einer Druckfeder 78 an der Wandung 76 der Vertiefung 72 anliegt.

Zwischen den beiden Vertiefungen 71, 72 ist die Biegerolle 70 mit im Radialschnitt gekrümmten Außenseiten 79,80 versehen. Mit diesen Außenseiten 79,80 liegt die Biegerolle 70 an einer schrägen Stützfläche 81 der Matrize 62 sowie an einem im Querschnitt hakenförmig ausgebildeten Abstützelement 82 an.

In der Ausgangslage gemäß Fig. 21 ragt die Leiste 63 unter der Kraft der Druckfeder 64 aus der Öffnung des Maschinentisches 52 vor. Das zu bearbeitende Blech 1 gelangt beim Vorschub in x- und y-Richtung auf die Auflagefläche 68 der Leiste 63. Die Biegerolle 70 und das Abstützelement 82 haben in dieser Lage Abstand vom Blech 1. Zur Ausführung des Biegevorganges wird der Biegestempel 58 in z-Richtung gegen das Blech 1 bewegt. Hierbei wird das Blech 1, sobald es an der Niederhaltefläche 59 des Biegestempels 48 anliegt, in z-Richtung nach unten in Richtung auf die Matrize 62 verschoben. Die Leiste 63 wird gegen die Kraft der Druckfeder 64 nach unten gedrückt. Das Abstützelement 82 hat am freien Ende eine Ausstoßnase 83, die in der niedergedrückten Stellung der Leiste 63 (Fig. 22) über die Leiste vorsteht. Beim Niederdrücken des Bleches 1 gelangt die Ausstoßnase 83 in den Bereich des hochzubiegenden Blechstückes 9. Da das Blech 1 in der beschriebenen Weise zur Bildung des Blechstückes 9 teilweise getrennt ist, sorgt die Ausstoßnase 83 beim Niederdrücken des Bleches 1 dafür, dass dieser teilweise ausgestanzte Blechbereich hochgebogen wird.

Die Vertiefung 71 der Biegerolle 70 ist in der Ausgangslage gemäß Fig. 21 so in Bezug auf das Blech 1 angeordnet, dass die Seitenwände 73, 74 der Vertiefung 71 winklig zur Blechunterseite liegen. Die Biegerolle 70 und die Leiste 63 sind so zueinander angeordnet, dass beim Niederdrücken die Leiste 63 in Kontakt mit der gekrümmten Außenseite 79 gelangt. Dies hat zur Folge, dass die Biegerolle 70 beim Niederdrücken der Leiste 63 entgegen dem Uhrzeigersinn verdreht wird. Das Absenken der Leiste 63 und das Drehen der Biegerolle 70 sind so aufeinander abgestimmt, dass der teilweise herausgestanzte Blechabschnitt des Bleches 1 in die Vertiefung 71 gelangt. Die Wand 74 der Vertiefung 71 legt sich an den teilweise herausgestanzten Blechteil an und biegt ihn aus der Blechebene heraus (Fig. 22). Das Blechstück 9 muss geringfügig überbogen werden, beispielsweise um 2°, weil das hochgebogene Blechstück 9 nach der Freigabe durch die Biegerolle 70 geringfügig zurückfedert. Durch das Überbiegen des Blechstückes 9 ist gewährleistet, dass es nach dem Biegevorgang rechtwinklig von der Blechebene absteht.

Die Ausstoßnase 83 des Abstützelementes 82 kommt beim Niederdrücken des Bleches 1 durch den Biegestempel 58 als erstes mit der Unterseite des teilweise herausgestanzten Blechabschnittes in Berührung, der dadurch bereits teilweise aus der Blechebene herausgebogen wird. Auf diese Weise wird das vollständige Herausbiegen des Blechstückes 9 durch die Biegerolle 70 erleichtert. Das Blechstück 9 wird an der Biegekante 61 des Biegestempels 58 zuverlässig gebogen. Die Ausstoßnase 83 hat ausreichenden Abstand von der gekrümmten Außenseite 80 der Biegerolle 70, so dass sie störungsfrei gedreht werden kann.

Ist der Biegevorgang abgeschlossen, wird der Biegestempel 58 in z-Richtung hochgefahren. Das Blech wird dadurch entlastet und durch die unter der Kraft der Druckfeder 64 stehende Leiste 63 angehoben. Die Biegerolle 70 steht unter der Kraft der Druckfeder 78, welche die Biegerolle 70 über den Stößel 77 im Uhrzeigersinn belastet. Der Stößel 77 sorgt beim Zurückfahren des Biegestempels 58 dafür, dass die Biegerolle 70 aus der Arbeitsstellung gemäß Fig. 22 zurück in die Ruhestellung gemäß Fig. 21 gedreht wird. Die Ruhestellung wird vorteilhaft durch einen Anschlag sichergestellt, an dem die Biegerolle 70 mit einer Anschlagfläche 84 (Fig. 22) zur Anlage kommt.

Auf die beschriebene Weise werden bei den verschiedenen Ausführungsformen der Stator- und Rotorbleche die Blechstücke 9 aus der Ebene des Bleches 1 herausgebogen. Das Blech 1 wird hierzu im erforderlichen Maße in x- bzw. y-Richtung transportiert. Um die verschiedenen Blechstücke über den Umfang der Rotor/Statorbleche herauszubiegen, werden das Werkzeugoberteil 53 und zumindest die Biegerolle 70, vorteilhaft jedoch die gesamte Matrize 62, um die c-Achse gedreht.

Die Biegerolle 70 kann auch so vorgesehen sein, dass sie nicht durch die Leiste 63 in Drehung versetzt wird, sondern durch einen eigenständigen Antrieb. Er wird über eine Steuerung so betätigt, dass die Biegerolle 70 zum richtigen Zeitpunkt im erforderlichen Maße um ihre Achse gedreht wird.

Die Vorrichtung kann auch abweichend vom dargestellten und beschriebenen Ausführungsbeispiel ausgebildet sein. Darum ist das beschriebene Ausführungsbeispiel nicht im einschränkenden Sinne zu verstehen.

## Patentansprüche

1. Stator/Rotorblech für Stator/Rotorpakete von Generatoren und Elektromotoren, mit von der Blechebene quer abstehenden Distanzstücken und mit Ausnehmungen,
**dadurch gekennzeichnet, dass** die Distanzstücke (9) aus der Blechebene herausgebogene Blechstücke sind.

2. Stator/Rotorblech nach Anspruch 1,
**dadurch gekennzeichnet, dass** die Distanzstücke (9) radial verlaufend angeordnet sind.

3. Stator/Rotorblech nach Anspruch 1,
**dadurch gekennzeichnet, dass** die Distanzstücke (9) unter einem Winkel zur zugehörigen Radialen liegen.

4. Stator/Rotorblech nach einem der Ansprüche 1 bis 3,
**dadurch gekennzeichnet, dass** die Distanzstücke (9) über den Umfang des Stator/Rotorbleches (14, 21, 35) gleichmäßig verteilt angeordnet sind.

5. Stator/Rotorblech nach einem der Ansprüche 1 bis 3,
**dadurch gekennzeichnet, dass** die Distanzstücke (9) über den Umfang des Stator/Rotorbleches (14, 21, 35) ungleichmäßig verteilt angeordnet sind.

6. Stator/Rotorblech nach einem der Ansprüche 1 bis 5,
**dadurch gekennzeichnet, dass** die Biegekante (26, 40) von in Umfangsrichtung des Stator/Rotorbleches (14, 21, 35) benachbarten Distanzstücken (9) an der gleichen Seite der zugehörigen Ausnehmung (3, 25, 39) vorgesehen ist.

7. Stator/Rotorblech nach einem der Ansprüche 1 bis 5,
**dadurch gekennzeichnet, dass** die Biegekante (43, 44; 47, 48) von in Umfangsrichtung des Stator/Rotorbleches (14, 21, 35) benachbarten Distanzstücken (9) an einander gegenüberliegenden Seiten der zugehörigen Ausnehmung (3, 45, 42) vorgesehen ist.

8. Stator/Rotorblech nach einem der Ansprüche 1 bis 7,
**dadurch gekennzeichnet, dass** die Distanzstücke (9) in wenigstens einer koaxial zu einer zentrischen Öffnung (36) des Stator/Rotorbleches (14, 21, 35) liegenden Reihe (23, 24, 45) angeordnet sind.

9. Stator/Rotorblech nach Anspruch 8,
**dadurch gekennzeichnet, dass** die Distanzstücke (9) in zwei oder mehr koaxial zueinander liegenden Reihen (23, 24, 45) angeordnet sind.

10. Stator/Rotorblech nach Anspruch 9,
**dadurch gekennzeichnet, dass** zumindest einige der Distanzstücke (9) in den Reihen (23, 24, 45) jeweils fluchtend zueinander angeordnet sind.

11. Stator/Rotorblech nach Anspruch 9,
**dadurch gekennzeichnet, dass** zumindest einige der Distanzstücke (9) in den Reihen (23, 24, 45) in Umfangsrichtung versetzt zueinander angeordnet sind.

12. Stator/Rotorblech nach einem der Ansprüche 1 bis 11,
**dadurch gekennzeichnet, dass** die Distanzstücke (9) gleiche Länge wie der Rand der benachbarten Ausnehmung (3, 25, 39, 42) haben.

13. Stator/Rotorblech nach einem der Ansprüche 1 bis 11,
**dadurch gekennzeichnet, dass** die Distanzstücke (9) kürzer sind als der Rand der benachbarten Ausnehmung (3, 25, 39, 42).

14. Stator/Rotorpaket nach einem der Ansprüche 1 bis 13,
**dadurch gekennzeichnet, dass** die Distanzstücke (9) senkrecht zur Blechebene liegen.

15. Stator/Rotorpaket mit wenigstens einem Stator/Rotorblech nach einem der Ansprüche 1 bis 14.

16. Stator/Rotorpaket nach Anspruch 15,
**dadurch gekennzeichnet, dass** das Stator/Rotorblech (14, 21, 35) zwischen zwei Blechpaketabschnitten (22) liegt, und dass die Distanzstücke (9) das Statorblechpaket (20) quer zu seiner Achse durchsetzende Lüftungskanäle (19) zwischen den Blechpaketabschnitten (19) wenigstens teilweise begrenzen.

17. Verfahren zur Herstellung eines Stator/Rotorbleches, bei dem aus einem Blech das Stator/Rotorblech mit Ausnehmungen gestanzt und Distanzstücke vorgesehen werden,
**dadurch gekennzeichnet, dass** aus dem Blech (20) Blechstücke (9) teilweise ausgestanzt werden, und dass die teilweise ausgestanzten Blechstücke (9) zur Bildung der Distanzstücke aus der Blechebene herausgebogen werden.
